# EUROPÄISCHE PATENTANMELDUNG

(11) **EP 2 599 651 A1**
(43) Veröffentlichungstag der Anmeldung: **05.06.2013**
(21) Anmeldenummer: 11191472.7
(22) Anmeldetag: 01.12.2011
(51) Int. Cl.: B60H 1/00, B60H 1/14, H01M 10/50

(54) **Heiz-/Kühlsystem für eine Batterie eines Kraftfahrzeugs sowie Betriebsverfahren hierfür**

(71) Anmelder: Magna E-Car Systems GmbH & Co OG, 8041 Graz (AT)
(72) Erfinder: Mandl, Bernhard, 8523 Frauental (AT)
(74) Vertreter: Rausch, Gabriele

(57) **Zusammenfassung**

Es wird ein Kraftfahrzeug angegeben, welches einen ersten Heiz-/Kühlkreislauf (1) mit einer darin angeordneten Wärmequelle/-senke (2) und einer ersten Pumpe (3) sowie einen zweiten Heiz-/Kühlkreislauf (4) mit einer darin angeordneten zu heizenden/kühlenden Batterie (5) und einer zweiten Pumpe (6) umfasst. Die beiden Heiz-/Kühlkreisläufe (1, 4) sind über wenigstens ein Ventil (7) derart verbindbar, dass beide Heiz-/Kühlkreisläufe (1, 4) vom selben flüssigen Wärmeträger durchströmt werden. Insbesondere kann im zweiten Heiz-/Kühlkreislauf (4) zwischen Ventil (7) und Batterie (5) zusätzlich ein Wärmetauscher (12) und/oder ein Reservoir und/oder ein Verwirbler und/oder eine lange Leitung vorgesehen sein. Weiterhin wird ein Betriebsverfahren für ein Kraftfahrzeug der genannten Art angegeben.

## Beschreibung

### TECHNISCHES GEBIET

Die Erfindung betrifft ein Kraftfahrzeug, welches einen ersten Heiz-/Kühlkreislauf mit einer darin angeordneten Wärmequelle/-senke und einer ersten Pumpe sowie einen zweiten Heiz-/Kühlkreislauf mit einer darin angeordneten zu heizenden/kühlenden Batterie und einer zweiten Pumpe umfasst. Des Weiteren betrifft die Erfindung ein Betriebsverfahren für ein solches Fahrzeug.

### STAND DER TECHNIK

Ein Heiz-/Kühlkreislauf für eine Batterie (einen Akkumulator) eines Kraftfahrzeugs ist an sich bekannt. Insbesondere leistungsstarke Batterien von Elektrokraftfahrzeugen und Hybridkraftfahrzeugen werden in der Regel temperiert, um diese in einem für die Leistungsentfaltung vorteilhaften Temperaturbereich zu betreiben. Bei hohen Außentemperaturen wird die Batterie daher gekühlt, bei niedrigen beheizt.

Beispielsweise ist aus der DE 42 39 834 A1 eine Batterieheizung über einen Brennstoffheizer oder eine Verbrennungskraftmaschine bekannt. Mit Hilfe eines Ventils kann die Heizung für die Batterie ein- oder ausgeschaltet werden. Problematisch ist dabei, dass ein Brennstoffheizer beziehungsweise eine Verbrennungskraftmaschine eine Vorlauftemperatur von zirka 75-85°C respektive zirka 90-110°C liefert, was für die Heizung der Batterie an sich zu hoch ist. Die Temperatur des Heizmediums sollte dort nämlich nach Möglichkeit nicht mehr als zirka 20°C über der Ist-Temperatur der Batterie liegen.

Aus der DE 101 28 164 A1 ist weiterhin eine Kühlung der Batterie über zwei getrennte Kühlkreisläufe bekannt. In einem ersten Kreislauf befinden sich ein Verdichter, ein Kondensator und ein Verdampfer, in einem zweiten Kühlkreislauf die Batterie und eine Pumpe. Die beiden Kreisläufe sind dabei über einen Wärmetauscher miteinander gekoppelt. Um die Kühlung der Batterie zu deaktivieren, kann der Wärmetauscher mit einem Bypass überbrückt werden. Nachteilig ist daran die relativ komplizierte Bauweise, die einen Wärmetauscher für die Kopplung der beiden Kühlkreisläufe erfordert.

### OFFENBARUNG DER ERFINDUNG

Die Aufgabe der Erfindung ist es daher, ein verbessertes Heiz-/Kühlsystem für eine Batterie eines Kraftfahrzeugs sowie ein verbessertes Betriebsverfahren hierfür anzugeben. Insbesondere soll die Batterie auf möglichst einfache Weise temperiert werden, ohne diese zu schädigen.

Die Aufgabe der Erfindung wird durch ein Kraftfahrzeug der eingangs beschriebenen Art gelöst, bei dem die beiden Heiz-/Kühlkreisläufe über wenigstens ein Ventil derart verbindbar sind, dass beide Heiz-/Kühlkreisläufe vom selben flüssigen Wärmeträger durchströmt werden.

Die Aufgabe der Erfindung wird weiterhin mit einem der Verfahren zum Betrieb eines Kraftfahrzeugs gelöst, wobei das Kraftfahrzeug einen ersten Heiz-/Kühlkreislauf mit einer darin angeordneten Wärmequelle/-senke und einer ersten Pumpe sowie einen zweiten Heiz-/Kühlkreislauf mit einer darin angeordneten zu heizenden/kühlenden Batterie und einer zweiten Pumpe umfasst, und wobei die beiden Heiz-/Kühlkreisläufe über wenigstens ein Ventil verbunden werden, derart, dass beide Heiz-/Kühlkreisläufe vom selben flüssigen Wärmeträger durchströmt werden.

Auf diese Weise ist es möglich, die beiden Heiz-/Kühlkreisläufe zu koppeln, ohne dass dazu ein vergleichsweise voluminöser und schwerer Wärmetauscher nötig wäre. Stattdessen wird zur Verbindung der Heiz-/Kühlkreisläufe ein relativ kompaktes und leichtes Ventil vorgesehen, wodurch auch das Kraftfahrzeug leichter und kompakter gestaltet werden kann.

Beispielsweise kann die Wärmequelle durch einen Brennstoffheizer gebildet sein. Vorteilhaft ist daran, dass dieser häufig ohnehin Bestandteil eines Kraftfahrzeugs ist, etwa als Standheizung zur Beheizung eines Fahrgastraums und/oder einer Verbrennungskraftmaschine. Die Wärmequelle kann aber beispielsweise auch durch eine Verbrennungskraftmaschine gebildet sein. Vorteilhaft ist eine solche häufig ohnehin Bestandteil eines Kraftfahrzeugs, etwa als Antriebsmotor oder als Range Extender bei elektrisch betriebenen Fahrzeugen. Die beim Betrieb der Verbrennungskraftmaschine anfallende Abwärme kann zur Beheizung einer Batterie dienen. Ist sowohl ein Range Extender als auch ein Brennstoffheizer vorhanden, so braucht der Range Extender für die Beheizung des Innenraums nicht eingeschaltet werden, womit ein leiser Betrieb des Fahrzeugs erreicht werden kann. Durch Verwendung ohnehin vorhandener Komponenten zur Beheizung einer Batterie ergibt sich jedenfalls ein Doppelnutzen derselben.

Weitere vorteilhafte Ausgestaltungen und Weiterbildungen der Erfindung ergeben sich nun aus den Unteransprüchen sowie aus der Beschreibung in Zusammenschau mit den Figuren.

Besonders vorteilhaft ist es, wenn das Ventil als Mischventil oder als getaktetes Umschaltventil ausgeführt ist und damit der Wärmeaustausch zwischen erstem und zweitem Heiz-/Kühlkreislauf einstellbar ist. Wie eingangs erwähnt ist die Vorlauftemperatur eines Brennstoffheizers (zirka 75-85°C) oder einer Verbrennungskraftmaschine (zirka 90-110°C) zu hoch, um damit ohne weitere Maßnahmen eine Batterie zu heizen. Die Temperatur des Heizmediums an der Batterie sollte nach Möglichkeit nämlich nicht mehr als zirka 20°C über der Batterietemperatur liegen. Mit Hilfe des genannten Ventils ist es nun möglich, dem ersten Heizkreislauf gezielt Wärme zu entziehen und dem zweiten Heizkreislauf zuzuführen.

In einer Variante wird dazu ein Umschaltventil eingesetzt, das getaktet, das heißt mit vergleichsweise hoher Frequenz zwischen einer Offenstellung und einer Schließstellung umgeschaltet wird. Durch Variation der Dauer von Offenstellung im Verhältnis zur Dauer der Schließstellung kann dem ersten Heizkreis mehr oder weniger Wärme entzogen und dem zweiten Heizkreis zugeführt werden. Eine solche Betriebsart eines Umschaltventils ist an sich bekannt und wird als "Pulsweitenmodulation" (PWM) bezeichnet.

Das Umschalten sollte dabei so schnell erfolgen, dass die dadurch erzeugten "Blöcke" des vom ersten Heizkreislauf stammenden heißen Wärmeträgers und "Blöcke" des im zweiten Heizkreislauf zirkulierenden vergleichsweise kühlen Wärmeträgers hinreichend vermischt an der Batterie ankommen. Der Wärmeträger hat dann an der Batterie also eine homogene Temperatur oder weist nur solche Temperaturschwankungen auf, dass die Batterie durch diese keinen Schaden nehmen kann. Beispielsweise kann die im zweiten Heizkreislauf angeordnete Pumpe hierfür unterstützend wirken. Ein weiterer Vorteil bei der Verwendung eines Umschaltventils ist, dass eine Steuerung desselben nur einen Digitalausgang aufzuweisen braucht.

Alternativ kann das Ventil aber auch als proportionales Mischventil ausgeführt sein. Dabei kann ein Zufluss aus dem ersten Heizkreislauf in den zweiten Heizkreislauf mit Hilfe eines Stellmotors eingestellt werden. Eine pulsweitenmodulierte Ventilansteuerung mit Digitalausgang kann dann entfallen, allerdings ist für die Ansteuerung eines Mischventils in aller Regel ein Analog- oder PWM-Ausgang einer mit dem Mischventil verbundenen Steuerung nötig. Unter Umständen sind Mischventile für den genannten Einsatzzweck jedoch schwer erhältlich, was dann den Einsatz eines getakteten Umschaltventils vorteilhaft macht.

Besonders vorteilhaft ist es, wenn im zweiten Heiz-/Kühlkreislauf zwischen Ventil und Batterie zusätzlich ein Wärmetauscher und/oder ein Reservoir und/oder ein Verwirbler und/oder eine lange Leitung vorgesehen ist. Der Wärmetauscher dient unter anderem als thermische Masse, wodurch sich insbesondere bei Verwendung eines getakteten Umschaltventils deutlich geringere Temperaturschwankungen des Wärmeträgers an der Batterie ergeben. Der Wärmetauscher wirkt im Heizbetrieb gleichsam als Dämpfung. Weiterhin besteht die Möglichkeit das Umschaltventil mit relativ geringer Frequenz zu takten (bevorzugt < 1Hz), ohne dass eine geforderte Maximaltemperatur an der Batterie überschritten wird. Die Lebensdauer des Umschaltventils kann somit deutlich gesteigert werden. Aber auch bei Verwendung eines analog angesteuerten Mischventils ergeben sich wegen der Dämpfung durch die genannte thermische Masse Vorteile. Eine Regelung zur Ansteuerung des Mischventils sowie der Stellmotor des Mischventils selbst brauchen nicht sehr rasch anzusprechen. Es können daher vergleichsweise einfach aufgebaute und somit auch kostengünstige Komponenten verbaut werden.

Eine ganz ähnliche Wirkung kann auch mit einem Reservoir und/oder einem Verwirbler und/oder einer langen Leitung erzielt werden. In einem Reservoir verweilen die ankommenden Blöcke von kühlem und heißem Wasser für eine bestimmte Zeit und gleichen damit ihre Temperatur einander an. Beispielsweise kann ein ohnehin notwendiger Ausgleichsbehälter dazu verwendet werden, welcher dann einen Doppelnutzen erbringt. Mit einem Verwirbler kann eine Vermischung der genannten Blöcke erreicht werden und eine lange Leitung wirkt wiederum als thermische Masse, ähnlich wie der Wärmetauscher. Deren Länge bestimmt sich anhand der Temperaturen der Blöcke von kühlem und heißem Wasser, deren Masse und Strömungsgeschwindigkeit, der thermischen Masse der Leitung sowie der tolerierbaren Temperaturschwankung an der Batterie. Selbstverständlich können die genannten Maßnahmen alleine oder in Kombination eingesetzt werden.

Vorteilhaft ist es in diesem Zusammenhang, wenn der Wärmetauscher als passiver Wasser/Luft-Wärmetauscher ausgeführt ist. Vorteilhaft wirkt in einer solchen Anordnung nicht nur die thermische Masse des passiven Wärmetauschers dämpfend auf Temperaturschwankungen des Wärmeträgers im zweiten Kühl-/Heizkreislauf, sondern es wird auch überschüssige Energie an die Umwelt abgegeben. Die an sich zu hohe

Vorlauftemperatur von einem Brennstoffheizer oder einer Verbrennungskraftmaschine kann so effektiv auf ein für die Batterie passendes Niveau gesenkt werden. Da die Heizung der Batterie vorwiegend im Stand erfolgt, kann eine übermäßige Wärmeabfuhr durch einen passiven Wärmetauscher in Grenzen gehalten werden.

Besonders vorteilhaft ist es auch, wenn der Wärmetauscher mit einem dritten Kühl-/Heizkreislauf verbunden ist. Vorzugsweise werden die der erste und zweite Heiz-/Kühlkreislauf in einem ersten Betriebszustand über das wenigstens eine Ventil verbunden, wobei ein im zweiten Heiz-/Kühlkreislauf zusätzlich vorgesehener und mit einem dritten Kühl-/Heizkreislauf verbundener Wärmetauscher deaktiviert ist. In einem zweiten Betriebszustand werden der erste und zweite Heiz-/Kühlkreislauf über das wenigstens eine Ventil voneinander getrennt, wobei der zusätzlich vorgesehene Wärmetauscher aktiviert ist. Der zweite Heizkreislauf dient in diesem Fall also nicht nur dem Beheizen der Batterie, sondern ist auch für die Kühlung derselben vorgesehen und erfüllt somit eine Doppelfunktion. Darüber hinaus wirkt der Wärmetauscher im Heizbetrieb als thermische Masse, wodurch sich insbesondere bei Verwendung eines getakteten Umschaltventils deutlich geringere Temperaturschwankungen des Wärmeträgers an der Batterie ergeben. Der Wärmetauscher wirkt im Heizbetrieb also als Dämpfung und erfüllt gemeinsam mit seiner Kühlfunktion somit eine Doppelfunktion.

Günstig ist es, wenn die Wärmequelle durch einen Elektromotor und/oder einen Generator und/oder einen Wechselrichter gebildet ist, da die Vorlauftemperatur in diesen Fällen in der Regel deutlich geringer ist als die Vorlauftemperatur eines Brennstoffheizers oder eines Verbrennungsmotors. Die beschriebenen Probleme, welche im Zusammenhang mit einer vergleichsweise hohen Vorlauftemperatur stehen, können auf diese Weise nochmals deutlich abgemildert werden. Darüber hinaus kann eine ohnehin anfallende Abwärme der genannten Aggregate für die Batterieheizung genutzt werden, ohne dass dazu extra der Brennstoffheizer eingeschaltet werden müsste.

Besonders vorteilhaft ist es weiterhin, wenn im zweiten Heiz-/Kühlkreislauf zwischen Ventil und Batterie ein Ladegerät für die Batterie angeordnet ist. Häufig ist in einem Kraftfahrzeug ein Batterieladegerät zum Laden der Batterie aus einem stationären Stromnetz vorgesehen. Durch die genannten Maßnahmen kann dieses durch seine Abwärme zur aktiven Beheizung der Batterie dienen, aber auch als dämpfende thermische Masse, wenn die Batterie mit Hilfe der im ersten Heizkreis angeordneten Wärmequelle beheizt wird. Auf diese Weise erfüllt das Batterieladegerät eine Mehrfachfunktion.

In einer günstigen Ausführungsvariante umfasst das Kraftfahrzeug, eine parallel zum Ladegerät liegende Bypass-Leitung und wenigstens ein Ventil, welches zur wahlweisen Leitung des Wärmeträgers über das Ladegerät oder die Bypass-Leitung vorgesehen ist. Dadurch kann das Batterieladegerät aus dem zweiten Heiz-/Kühlkreislauf ausgekoppelt werden, beispielsweise wenn nur die Batterie gekühlt werden soll.

Günstig ist es, wenn der erste Heiz-/Kühlkreislauf für die Heizung/Kühlung und der dritte Kühl-/Heizkreislauf für die Kühlung/Heizung eines Fahrgastraumes des Kraftfahrzeugs vorgesehen ist. Auf diese Weise können die genannten Kreisläufe mehrfach genutzt werden, beziehungsweise können ohnehin vorhandene Kreisläufe zur Klimatisierung eines Fahrgastraums auch für die Temperierung der Batterie genutzt werden. Dadurch kann die Erfindung mit vergleichsweise geringem Aufwand in die Realität umgesetzt werden.

Besonders vorteilhaft ist es schließlich, wenn das Ventil zur Verbindung des ersten und zweiten Heiz-/Kühlkreislaufs im ersten Heiz-/Kühlkreislauf zwischen einem Wärmetauscher zur Heizung/Kühlung des Fahrgastraumes und der Wärmequelle angeordnet ist. Auf diese Weise kann die Vorlauftemperatur für den zweiten Heizkreis gesenkt werden. Die beschriebenen Probleme, welche im Zusammenhang mit einer vergleichsweise hohen Vorlauftemperatur stehen, können auf diese Weise nochmals deutlich abgemildert werden.

Generell besteht einer der Vorteile der Erfindung darin, dass ohnehin in einem Fahrzeug vorhandene Komponenten für die Temperierung der Batterie eingesetzt werden und damit einen Doppelnutzen erbringen. Dadurch kann die Erfindung mit vergleichsweise geringem Aufwand in die Realität umgesetzt werden. Gleichzeitig bleibt das Fahrzeuggewicht trotz umfangreicherer Funktionalität im Wesentlichen konstant. Der Nutzen der Erfindung tritt hier also besonders hervor.

In den obigen Beispielen wurde teilweise davon ausgegangen, dass es sich beim ersten Kreislauf um einen Heizkreislauf und beim dritten Kreislauf um einen Kühlkreislauf handelt. Selbstverständlich ist die erfinderische Lehre aber analog auch auf System anwendbar, bei denen der erste Kreislauf als Kühlkreislauf und der dritte Kreislauf als Heizkreislauf ausgebildet ist. Generell sind die Grenzen zwischen Kühl- und Heizkreislauf schwimmend, da prinzipiell nur Wärme von einem Ort zu einem anderen übertragen wird und die Bezeichnung "Heizen" oder "Kühlen" im Wesentlichen vom Ort des Betrachters abhängt.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: ein Blockschaltbild eines ersten beispielhaften Heizsystem für eine Batterie eines Kraftfahrzeugs;
- Figur 2: wie Fig. 1, nur mit einem zusätzlichen Kühlkreislauf;
- Figur 3: wie Fig. 2, nur mit einem zusätzlichen Kühlsystem für den Antriebsstrang des Kraftfahrzeugs und
- Figur 4: wie Fig. 3, nur mit einem in den Heiz-/Kühlkreislauf der Batterie integrierten B atterieladegerät.

### DETAILIERTE BESCHREIBUNG DER ERFINDUNG

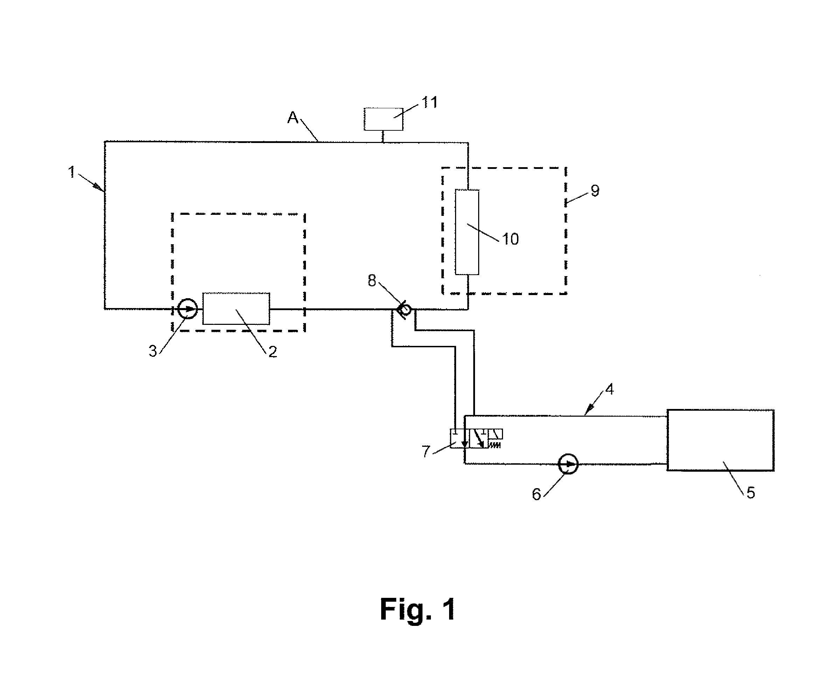

Fig. 1 zeigt einen ersten Heizkreislauf 1 mit einer darin angeordneten Wärmequelle 2 und einer ersten Pumpe 3 sowie einen zweiten Heizkreislauf 4 mit einer darin angeordneten zu heizenden Batterie 5 und einer zweiten Pumpe 6. Die beiden Heizkreisläufe 1 und 4 sind über ein Ventil 7 derart verbindbar, dass sie vom selben flüssigen Wärmeträger durchströmt werden. Konkret ist das Ventil 7 als getaktetes Umschaltventil ausgeführt, wodurch der Wärmeaustausch zwischen erstem und zweitem Heizkreislauf 1 und 4 einstellbar ist. Alternativ kann das Ventil 7 auch als Mischventil ausgeführt sein. Weiterhin umfasst der erste Heizkreislauf 1 ein zwischen den beiden Verbindungsleitungen zum zweiten Heizkreislauf 4 angeordnetes Rückschlagventil 8, einen in einem Fahrgastraum 9 eines Fahrzeugs, welches die in Fig. 1 dargestellte Anordnung beinhaltet, angeordneten Wärmetauscher 10 sowie einen Ausgleichsbehälter 11.

Die Funktion der in der Fig. 1 dargestellten Anordnung ist nun wie folgt:
Mit Hilfe der Wärmequelle 2 wird Wärme erzeugt und an einen flüssigen Wärmeträger übertragen, welcher von der Pumpe 3 in Bewegung versetzt wird und im ersten Heizkreislauf 1 gegen den Uhrzeigersinn zirkuliert. Die Wärmequelle 2 kann beispielsweise als Brennstoffheizer ausgeführt sein und mit einem Kraftstoff betrieben werden, mit welchem auch das Kraftfahrzeug angetrieben wird, beispielsweis mit Benzin, Diesel oder Gas. Über den Wärmetauscher 10 kann nun in an sich bekannter Weise der Fahrgastraum 9 erwärmt werden. Um Volumsschwankungen des Wärmeträgers ausgleichen zu können, ist der im ersten Heizkreislauf 1 angeordnete Ausgleichsbehälter 11 vorgesehen. Der erste Heizkreislauf 1 erfüllt somit die Funktion einer an sich bekannten Standheizung für ein Kraftfahrzeug.

Bei elektrisch angetriebenen Fahrzeugen sollte die Fahrbatterie 5 für eine optimale Funktion eine bestimmte Temperatur aufweisen. Insbesondere bei tiefen Außentemperaturen kann die Batterie 5 zu diesem Zweck beheizt werden. Problematisch ist dabei, dass der Brennstoffheizer 2 in der Regel eine Temperatur liefert, die zu hoch ist, um die Batterie 5 zu heizen. Beispielsweise liefert ein Brennstoffheizer 2 eine Temperatur von zirka 75-85°C, wohingegen die Temperatur des Heizmediums an der Batterie 5 nach Möglichkeit nicht mehr als zirka 20°C über der Batterietemperatur liegen sollte. Die Batterie 5 kann daher nicht ohne weiteres in den ersten Heizkreislauf 1 eingefügt werden. Stattdessen wird dem ersten Heizkreislauf 1 mit Hilfe des Ventils 7 gezielt Wärme entzogen und dem zweiten Heizkreislauf 4 zugeführt. Dazu wird das Umschaltventil 7 getaktet, das heißt mit vergleichsweise hoher Frequenz zwischen der dargestellten Stellung (Ventilstellung 1) und der anderen, nicht dargestellten Stellung (Ventilstellung 2) umgeschaltet. Durch Variation der Dauer von Ventilstellung 1 im Verhältnis zur Dauer der Ventilstellung 2 kann dem ersten Heizkreis 1 mehr oder weniger Wärme entzogen und dem zweiten Heizkreis 4 zugeführt werden. Eine solche Betriebsart eines Umschaltventils 7 ist an sich bekannt und wird als "Pulsweitenmodulation" (PWM) bezeichnet. Weiterhin kann die Wärmezufuhr in den zweiten Heizkreis 4 durch eine entsprechende Ansteuerung der Pumpe 3 und/oder der Pumpe 6 beeinflusst werden.

Somit wechseln die Ventilstellung 1 (im zweiten Heizkreislauf 4 zirkuliert der Wärmeträger angetrieben von der Pumpe 6 isoliert vom ersten Heizkreislauf 1 gegen den Uhrzeigersinn) und die Ventilstellung 2 (erster und zweiter Heizkreislauf 1 und 4 sind verbunden) einander ab. Das Rückschlagventil 8 verhindert in der Ventilstellung 2 des Ventils 7, dass der Wärmeträger durch die Pumpe 6 entgegen der eigentlichen Fließrichtung im ersten Heizkreis 1 gedrückt wird. Auf dieses Rückschlagventil 8 kann bei geeigneter Anordnung der Verzweigungen auch verzichtet werden, wenn durch die dabei herrschenden Druckverhältnisse ein Rückströmen verhindert werden kann.

Das Umschalten des Ventils 2 erfolgt dabei so schnell, dass an der Pumpe 6 sozusagen abwechselnd "Blöcke" des vom ersten Heizkreislauf 1 stammenden heißen Wärmeträgers und "Blöcke" des im zweiten Heizkreislauf 4 zirkulierenden vergleichsweise kühlen Wärmeträgers ankommen und von dieser verwirbelt beziehungsweise vermischt werden. An der Batterie 5 kommt der Wärmeträger daher mit homogener Temperatur an oder weist nur solche Temperaturschwankungen auf, dass die Batterie 5 durch diese keinen Schaden nehmen kann.

In Fig. 1 ist das Ventil 7 als getaktetes Umschaltventil 7 ausgeführt. Gleichwertig kann aber auch ein Mischventil anstelle des getakteten Umschaltventils 7 vorgesehen sein. Eine pulsweitenmodulierte Ventilansteuerung mit Hilfe eines Digitalausgang eines entsprechenden Steuergeräts kann dann entfallen, allerdings ist für die Ansteuerung eines Mischventils in aller Regel ein Analog- oder PWM-Ausgang einer mit dem Mischventil verbundenen Steuerung nötig.

In Fig. 1 ist das Ventil 7 weiterhin vor dem Wärmetauscher 10 angeordnet. Alternativ kann das Ventil 7 aber auch nach dem Wärmetauscher 10 angeordnet sein. Vorteilhaft ist dann der Wärmeträger schon etwas abgekühlt, wodurch die Schaltfrequenz des Umschaltventils 7 reduziert werden kann. Die beiden Verbindungsleitungen zwischen dem ersten und dem zweiten Heizkreis 1 und 4 sowie das Rückschlagventil 8 sind in diesem Fall im Leitungsabschnitt A zwischen Wärmetauscher 10 und Brennstoffheizer 2 anzuordnen.

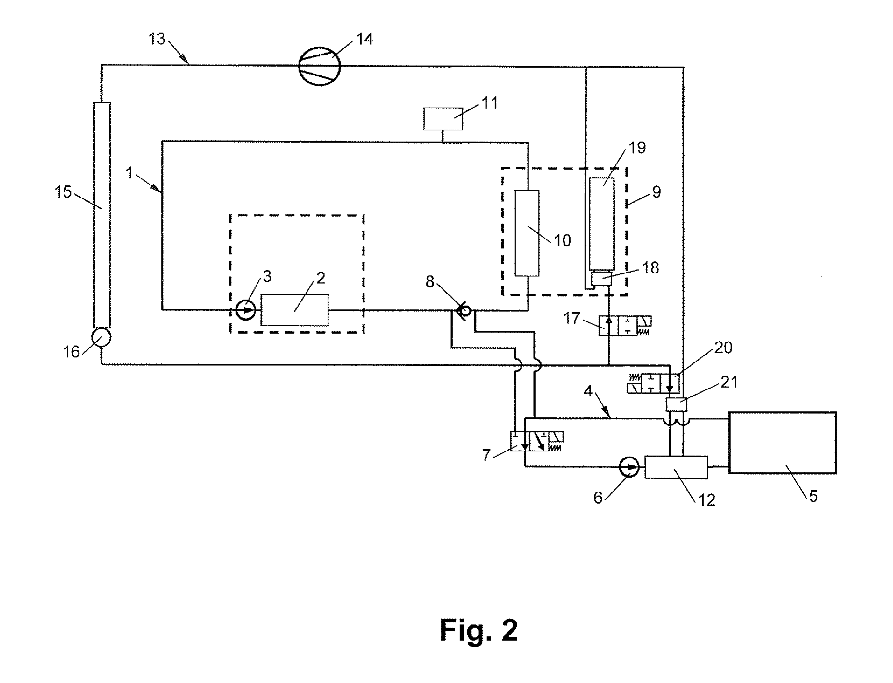

Fig. 2 zeigt nun eine Anordnung, welche der in Fig. 1 dargestellten Anordnung sehr ähnlich ist. Zusätzlich ist im zweiten Heizkreislauf 4 zwischen dem Ventil 7 und der Batterie 5 aber ein Wärmetauscher 12 vorgesehen, welcher mit einem (dritten) Kühlkreislauf 13 verbunden ist. Der Kühlkreislauf 13 umfasst einen Verdichter 14, einen Kondensator 15, einen Trockner 16, ein Absperrventil 17, ein thermostatisches Expansionsventil 18 und einen Verdampfer 19.

Die Funktionsweise eines solchen Kühlkreislaufs 13 ist an sich bekannt und wird daher nur kurz umrissen. Im Verdichter 14 wird ein Kältemittel verdichtet, im Kondensator 15 verflüssigt, im Trockner 16 getrocknet und mit Hilfe des Expansionsventils 18 entspannt. Im nachgeschalteten Verdampfer 19 verdampft das Kältemittel schließlich unter Wärmeaufnahme bei niedriger Temperatur und kühlt so den Fahrgastraum 9. Die Funktion des Kühlkreislaufs 13 entspricht somit einer an sich bekannten Klimaanlage für ein Kraftfahrzeug.

Parallel zum Verdampfer 19 ist nun ein weiter Zweig vorgesehen, in welchem ein weiteres Absperrventil 20, ein weiteres Thermostatisches Expansionsventil 21 und der Wärmetauscher 12 angeordnet sind. Mit Hilfe des Wärmetauschers 12 kann das im Kühlkreislauf zirkulierende Kühlmittel verdampft und der im zweiten Kühlkreislauf 4 zirkulierende flüssige Wärmeträger gekühlt werden. Ein solcher Wärmetauscher 12 ist auch unter dem Begriff "Chiller" bekannt.

In einem ersten Betriebszustand werden die beiden Heizkreisläufe 1 und 4 über das Ventil 7 verbunden, wobei der im zweiten Heizkreislauf 4 zusätzlich vorgesehene Wärmetauscher 12 respektive der Kühlkreislauf 13 deaktiviert ist. In einem zweiten Betriebszustand werden die beiden Heizkreisläufe 1 und 4 über das Ventil 7 voneinander getrennt, wobei der zusätzlich vorgesehene Wärmetauscher 12 respektive der Kühlkreislauf 13 aktiviert sein kann.

Der zweite Heizkreislauf 4 dient in diesem Beispiel also nicht nur dem Beheizen der Batterie 5, sondern ist auch für die Kühlung derselben vorgesehen. Darüber hinaus wirkt der Wärmetauscher 12 im Heizbetrieb als thermische Masse, wodurch sich insbesondere bei Verwendung eines getakteten Umschaltventils 7 deutlich geringere Temperaturschwankungen des Wärmeträgers an der Batterie 5 ergeben. Der Wärmetauscher 12 wirkt im Heizbetrieb gleichsam als Dämpfung und erfüllt somit eine Doppelfunktion.

Mit Hilfe der Absperrventile 17 und 20 können die genannten Zweige des Kühlkreislaufes 13 individuell aktiviert oder deaktiviert werden, um den Fahrgastraum 9 respektive die Batterie 5 bedarfsweise zu kühlen.

Anstelle des Wärmetauschers 12 oder zusätzlich dazu können auch ein Reservoir und/oder ein Verwirbler und/oder eine lange Leitung vorgesehen werden werden, um die Temperaturschwankungen an der Batterie 5 auch bei niedriger Taktfrequenz am Umschaltventil 7 gering zu halten. In einem Reservoir verweilen die ankommenden Blöcke von kühlem und heißem Wasser für eine bestimmte Zeit und gleichen damit ihre Temperatur einander an. Beispielsweise kann ein ohnehin notwendiger Ausgleichsbehälter dazu verwendet werden, welcher dann einen Doppelnutzen erbringt. Mit einem Verwirbler kann eine Vermischung der genannten Blöcke erreicht werden, wodurch eine Homogenisierung der Temperatur auch bei vergleichsweise kurzer Verweildauer des Wärmeträgers in demselben erzielt werden kann. Eine besonders gute Homogenisierung der Temperatur gelingt, wenn der Wärmeträger in einem Reservoir verwirbelt wird. Die Grenzen zwischen einem "Verwirbler" und einem "Reservoir" sind dabei fließend.

Mit ähnlicher Wirkung wie der Wärmetauscher 12 kann zudem eine lange Leitung vor der Batterie 5 vorgesehen werden. Diese wirkt als thermische Masse, wodurch ebenfalls ein Angleichen der unterschiedlichen Temperaturen des Wärmeträgers gelingt. Selbstverständlich können die genannten Maßnahmen alleine oder in Kombination eingesetzt werden.

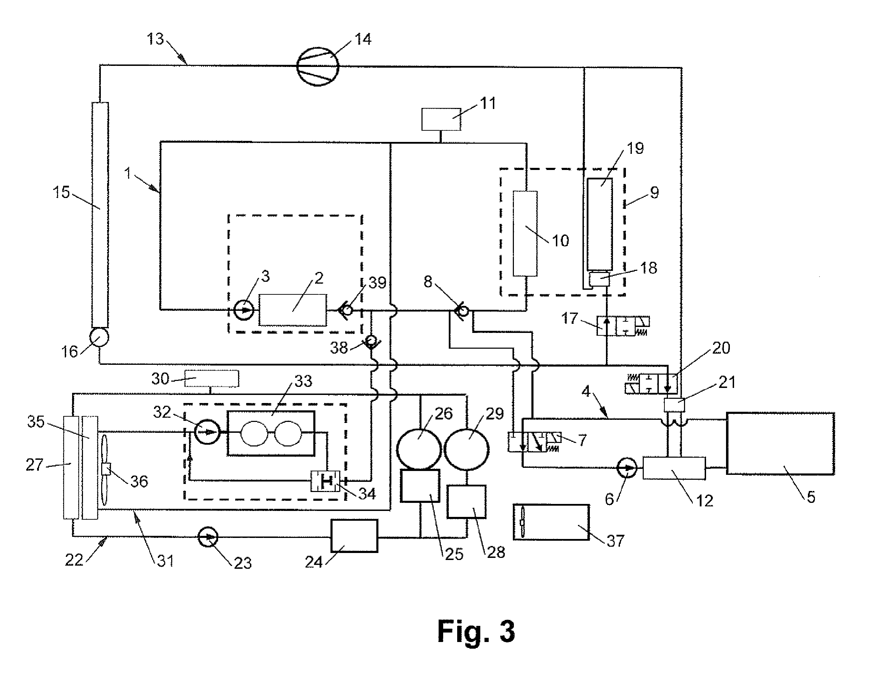

Fig. 3 zeigt nun eine Anordnung, welche der in Fig. 2 dargestellten Anordnung sehr ähnlich ist. Zusätzlich umfasst die Anordnung einen (vierten) Kühlkreislauf 22, in welchem ein Kühlmittel angetrieben von einer Pumpe 23 gegen den Uhrzeigersinn zirkuliert. Im Kühlkreislauf 22 sind ein DC/DC-Wandler 24, ein DC/AC-Wandler 25, ein Elektromotor 26 und ein Wärmetauscher 27 angeordnet. In einem zum DC/AC-Wandler 25 und Elektromotor 26 parallel liegenden Zweig sind ein weiterer DC/AC-Wandler 28 und ein Generator 29 angeordnet. Zusätzlich befindet sich ein Ausgleichsbehälter 30 im Kühlkreislauf 22.

Weiterhin umfasst die Anordnung einen (fünften) Kühlkreislauf 31, in dem eine Pumpe 32, ein Verbrennungsmotor 33, ein Umschaltventil 34 und ein Wärmetauscher 35 angeordnet sind. Im Bereich der Wärmetauscher 27 und 35 ist darüber hinaus ein Gebläse 36 vorgesehen. Schließlich umfasst die Anordnung ein Batterieladegerät 37 mit eingebautem Kühlgebläse.

Die Funktion der in Fig. 3 dargestellten Anordnung, insbesondere der zusätzlich zur Fig. 2 vorhandenen Aggregate, ist nun wie folgt:
Der DC/DC-Wandler 24, der DC/AC-Wandler 25 und der Elektromotor 26 dienen dem Antrieb des Fahrzeugs, wobei der DC/AC-Wandler 25 die Gleichspannung der Batterie 5 in an sich bekannter Weise in eine für den Elektromotor 26, welcher zumeist als Synchronmotor oder Asynchronmotor ausgebildet ist, nötige Wechselspannung umformt. Der DC/DC-Wandler 24 wandelt die Spannung der Batterie 5, welche in der Regel einige hundert Volt beträgt, in eine niedrige Spannung um (zum Beispiel 12 V), welche für periphere Geräte wie Stellmotoren, Entertainment-Systeme, Navigationssystem, Beleuchtung und dergleichen benötigt wird. An dieser Stelle wird angemerkt, dass die elektrischen Verbindungen der besseren Übersicht halber in den Figuren nicht eingezeichnet sind.

Der Verbrennungsmotor 33 ist mechanisch mit dem Generator 29 gekoppelt, welcher im Bedarfsfall die Batterie 5 über den DC/AC-Wandler 28 lädt, beziehungsweise den Elektromotor 26 mit elektrischer Energie versorgt. Der Verbrennungsmotor 33 bildet somit einen an sich bekannten "Range Extender".

Schließlich ist das Batterieladegerät 37 zum Laden der Batterie 5 aus einem stationären Stromnetz vorgesehen.

Um die genannten Aggregate auf einer optimalen Betriebstemperatur zu halten, werden diese gekühlt. Der DC/DC-Wandler 24, der DC/AC-Wandler 25, der Elektromotor 26, der DC/AC-Wandler 28 und der Generator 29 werden über den Wärmetauscher 27 (Kühlkreislauf 22) gekühlt. Bedarfsweise kann das Gebläse 36 für eine bessere Kühlleistung hinzu geschaltet werden.

Der Verbrennungsmotor 33 wird über den Wärmetauscher 35 (Kühlkreislauf 31) gekühlt, wobei für eine bessere Kühlleistung ebenfalls das Gebläse 36 hinzu geschaltet werden kann. Damit sich der Verbrennungsmotor 33 bis zum Erreichen seiner optimalen Betriebstemperatur erwärmen kann, ist das Umschaltventil 34 vorgesehen, welches den Wärmeträger vorerst nur über die Pumpe 32 und den Verbrennungsmotor 33 und erst später auch über den Wärmetauscher 35 leitet.

Im konkreten Beispiel wird die Abwärme des Verbrennungsmotors 33 auch über den Wärmetauscher 10 geleitet, wodurch der Fahrgastraum 9 in an sich bekannter Weise mit Hilfe des Verbrennungsmotors 33 beheizt werden kann. Desgleichen kann die Abwärme des Verbrennungsmotors 33 auch über die Batterie 5 geleitet werden, um diese zu beheizen. Die Wärmequelle zur Beheizung der Batterie 5 ist in diesem Fall also durch die Verbrennungskraftmaschine 33 gebildet. Damit sich die Pumpen 3, 6 und 32 beim Koppeln der Heizkreise 1, 4 und 31 nicht in ungünstiger Weise beeinflussen, das heißt damit der Wärmeträger nicht entgegen seiner vorgesehenen Fließrichtung gedrückt werden kann, sind in der in Fig. 3 dargestellten Anordnung noch zusätzliche Rückschlagventile 38 und 39 vorgesehen. Auf diese Rückschlagventile 38 und/oder 39 kann bei geeigneter Anordnung der Verzweigungen verzichtet werden, wenn durch die dabei herrschenden Druckverhältnisse ein Rückströmen verhindert werden kann.

In der Fig. 3 sind der Brennstoffheizer 2 und die Verbrennungskraftmaschine 33 als Wärmequellen für die Beheizung des Fahrgastraumes 9 und der Batterie 5 vorgesehen. Denkbar ist natürlich auch, dass die Wärmequelle alternativ oder zusätzlich durch den Elektromotor 26 und/oder den Generator 29 und/oder durch einen oder mehrere der Wechselrichter 24, 25 und 28 gebildet ist. In diesem Fall wäre der Kühl-/Heizkreislauf 22 mit dem Heizkreislauf 1 respektive 4 zu koppeln.

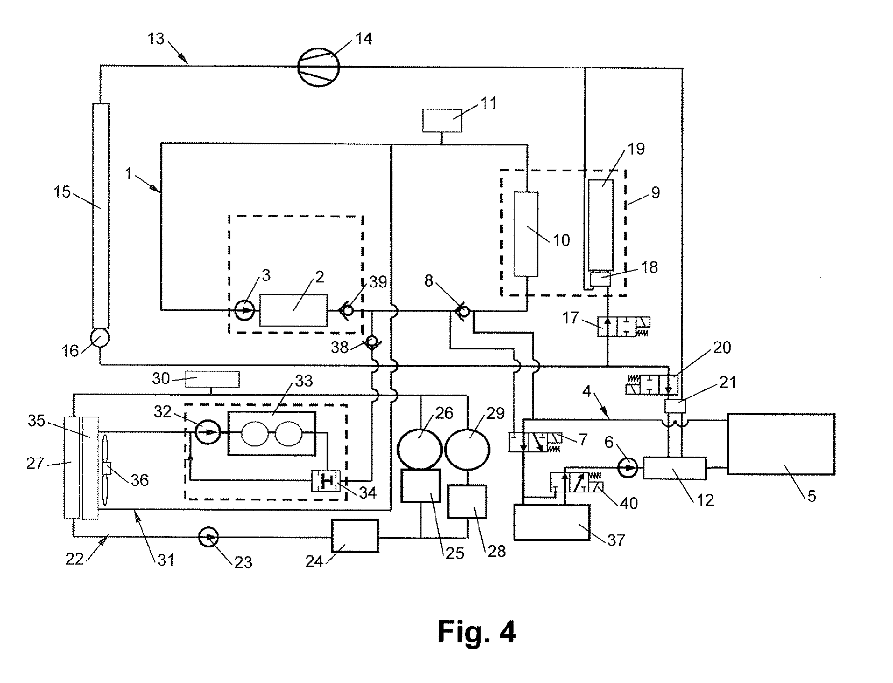

Fig. 4 zeigt nun eine Anordnung, welche der in Fig. 3 dargestellten Anordnung sehr ähnlich ist. Im Unterschied dazu weist das Batterieladegerät 37 aber keinen eingebauten Lüfter auf, sondern ist in den zweiten Heiz-/Kühlkreislauf 4 integriert. Konkret ist dieses zwischen dem Ventil 7 und der Batterie 5 angeordnet. Zusätzlich ist eine parallel zum Ladegerät 37 liegende Bypass-Leitung vorgesehen sowie ein Ventil 40, welches zur wahlweisen Leitung des Wärmeträgers über das Ladegerät 37 oder die Bypass-Leitung vorgesehen ist.

In der dargestellten Stellung des Ventils 40 kann das Ladegerät 37 über den Wärmetauscher 12 (bzw. über einen im zweiten Heiz-/Kühlkreislauf 4 angeordneten, jedoch in der Fig. 4 nicht dargestellten Luft/Kühlmittelwärmetauscher) gekühlt werden. Zusätzlich kann das Ladegerät 37 auch als Wärmequelle zur Beheizung der Batterie 5 und auch des Fahrgastraumes 9 dienen. Schließlich dient es auch als thermische Masse, wenn die Batterie 5 über den Brennstoffheizer 2 oder die Verbrennungskraftmaschine 33 beheizt wird, sodass die durch das Umschalten des Ventils 7 bedingten Temperaturschwankungen des Wärmeträgers weitgehend ausgeglichen werden. Auf diese Weise erfüllt das Batterieladegerät 37 eine Mehrfachfunktion. Durch Betätigen des Ventils 40 kann das Batterieladegerät 37 aus dem zweiten Heiz-/Kühlkreislauf 4 ausgekoppelt werden, beispielsweise wenn nur die Batterie 5, nicht aber das Batterieladegerät 37 gekühlt werden soll.

Durch Nutzung der thermischen Masse des Wärmetauschers ("Chillers") 12, welcher häufig ohnehin in einem Kühlkreislauf 4 zur Kühlung der Batterie 5 vorhanden ist, und/oder durch Nutzung der thermischen Masse eines Batterieladegeräts 37, welches in der Regel ebenfalls an Bord des Fahrzeugs vorhanden ist, können die durch ein Umschaltventil 7 verursachten Temperaturschwankungen des Wärmeträgers deutlich gesenkt werden. Weiterhin besteht die Möglichkeit das Umschaltventil 7 mit relativ geringer Frequenz zu takten, ohne dass eine geforderte Maximaltemperatur an der Batterie 5 überschritten wird. Die Lebensdauer des Umschaltventils 7 kann somit deutlich gesteigert werden.

Aber auch bei Verwendung eines analog angesteuerten Mischventils ergeben sich wegen der Dämpfung durch die genannten thermischen Massen Vorteile. Eine Regelung zur Ansteuerung des Mischventils sowie der Stellmotor des Mischventils selbst brauchen nicht sehr rasch anzusprechen. Es können daher vergleichsweise einfach aufgebaute und somit auch kostengünstige Komponenten verbaut werden.

In den obigen Beispielen wurde davon ausgegangen, dass es sich beim ersten Kreislauf 1 um einen Heizkreislauf und beim dritten Kreislauf 13 um einen Kühlkreislauf handelt. Selbstverständlich ist die erfinderische Lehre aber analog auch auf System anwendbar, bei denen der erste Kreislauf 1 als Kühlkreislauf und der dritte Kreislauf 13 als Heizkreislauf ausgebildet ist. Generell sind die Grenzen zwischen eine Kühlkreislauf und einem Heizkreislauf schwimmend, da zum Beispiel der Kreislauf 31 die Verbrennungskraftmaschine 33 kühlt, den Wärmetauscher 10 respektive die Batterie 5 aber beheizt. Insofern kann für die Kreisläufe 1, 4, 13, 22 und 31 generell der Begriff "Kühl-/Heizkreislauf" verwendet werden.

Generell kann die übertragene Wärmemenge beziehungsweise thermische Leistung in an sich bekannter Weise auch durch Variation der Leistung der beteiligten Pumpen 3, 6 und 32, des Verdichters 14, sowie des Gebläses 36 beeinflusst werden. Beispielsweise kann fast die gesamte Abwärme der Verbrennungskraftmaschine 33 genutzt werden, wenn das Gebläse 36 deaktiviert und die Pumpe 32 auf voller Leistung läuft usw.

In den obigen Beispielen wurde weiterhin davon ausgegangen, dass es sich beim Wärmetauscher 12 um einen Verdampfer/Chiller handelt. Dies ist jedoch keine zwingende Bedingung. Beim Wärmetauscher 12 kann es sich auch um einen passiven Wärmetauscher handeln, insbesondere um einen Wasser/Luft-Wärmetauscher mit Kühlrippen zur Umwelt. Beispielsweise könnte also auch der Wärmetauscher 27 und/oder 35 in den zweiten Kühl-/Heizkreislauf 4 eingefügt werden, vorzugsweise über ein dem Ventil 40 analoges Umschaltventil. Vorteilhaft wirkt in einer solchen Anordnung nicht nur die thermische Masse des passiven Wärmetauschers dämpfend auf Temperaturschwankungen des Wärmeträgers im zweiten Kühl-/Heizkreislauf 4, sondern es wird auch überschüssige Energie an die Umwelt abgegeben. Die an sich zu hohe Vorlauftemperatur von beispielsweise 90 bis 110° des Verbrennungsmotors 33 kann so effektiv auf ein für die Batterie 5 passendes Niveau gesenkt werden. Da die Heizung der Batterie 5 vorwiegend im Stand erfolgt, kann eine übermäßige Wärmeabfuhr durch einen passiven Wärmetauscher jedoch in Grenzen gehalten werden.

Abschließend wird festgehalten, dass die Bestandteile der Figuren ggf. nicht maßstabsgetreu dargestellt sind und dass die einzelnen in den Figuren dargestellten Varianten auch den Gegenstand einer unabhängigen Erfindung bilden können. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen. Weiterhin wird angemerkt, dass die einzelnen Kühl-/Heizkreise auch mehr Komponenten als dargestellt oder auch weniger Komponenten als dargestellt aufweisen können, ohne dass dadurch der Grundgedanke der vorliegenden Erfindung verlassen werden würde.

## Patentansprüche

1. Kraftfahrzeug, umfassend einen ersten Heiz-/Kühlkreislauf (1) mit einer darin angeordneten Wärmequelle/-senke (2) und einer ersten Pumpe (3) sowie einen zweiten Heiz-/Kühlkreislauf (4) mit einer darin angeordneten zu heizenden/kühlenden Batterie (5) und einer zweiten Pumpe (6),
**dadurch gekennzeichnet,**
**dass** die beiden Heiz-/Kühlkreisläufe (1, 4) über wenigstens ein Ventil (7) derart verbindbar sind, dass beide Heiz-/Kühlkreisläufe (1, 4) vom selben flüssigen Wärmeträger durchströmt werden.

2. Kraftfahrzeug nach Anspruch 1, **dadurch gekennzeichnet, dass** das Ventil als Mischventil oder als getaktetes Umschaltventil (7) ausgeführt ist und damit der Wärmeaustausch zwischen erstem und zweitem Heiz-/Kühlkreislauf (1, 4) einstellbar ist.

3. Kraftfahrzeug nach Anspruch 1 oder 2, **dadurch gekennzeichnet, dass** im zweiten Heiz-/Kühlkreislauf (4) zwischen Ventil (7) und Batterie (5) zusätzlich ein Wärmetauscher (12) und/oder ein Reservoir und/oder ein Verwirbler und/oder eine lange Leitung vorgesehen ist.

4. Kraftfahrzeug nach Anspruch 3, **dadurch gekennzeichnet, dass** der Wärmetauscher (12) als passiver Wasser/Luft-Wärmetauscher ausgeführt ist

5. Kraftfahrzeug nach Anspruch 3, **dadurch gekennzeichnet, dass** der Wärmetauscher (12) mit einem dritten Kühl-/Heizkreislauf (13) verbunden ist

6. Kraftfahrzeug nach einem der Ansprüche 1 bis 5, **dadurch gekennzeichnet, dass** die Wärmequelle durch einen Brennstoffheizer (2) und/oder durch eine Verbrennungskraftmaschine (33) gebildet ist.

7. Kraftfahrzeug nach einem der Ansprüche 1 bis 6, **dadurch gekennzeichnet, dass** die Wärmequelle durch einen Elektromotor (26) und/oder einen Generator (29) und/oder einen Wechselrichter (24, 25, 28) gebildet ist.

8. Kraftfahrzeug nach einem der Ansprüche 1 bis 7, **gekennzeichnet durch** ein im zweiten Heiz-/Kühlkreislauf (4) zwischen Ventil (7) und Batterie (5) angeordnetes Ladegerät (37) für die Batterie (5).

9. Kraftfahrzeug nach Anspruch 8, **gekennzeichnet durch** eine parallel zum Ladegerät (37) liegende Bypass-Leitung und wenigstens ein Ventil (40), welches zur wahlweisen Leitung des Wärmeträgers über das Ladegerät (37) oder die Bypass-Leitung vorgesehen ist.

10. Kraftfahrzeug nach einem der Ansprüche 1 bis 9, **dadurch gekennzeichnet, dass** der erste Heiz-/Kühlkreislauf (1) für die Heizung/Kühlung und der dritte Kühl-/Heizkreislauf (13) für die Kühlung/Heizung eines Fahrgastraumes (9) des Kraftfahrzeugs vorgesehen ist.

11. Kraftfahrzeug nach Anspruch 10, **dadurch gekennzeichnet, dass** das Ventil (7) zur Verbindung des ersten und zweiten Heiz-/Kühlkreislaufs (1, 4) im ersten Heiz-/Kühlkreislauf (1) zwischen einem Wärmetauscher (10) zur Heizung/Kühlung des Fahrgastraumes (9) und der Wärmequelle (2) angeordnet ist.

12. Verfahren zum Betrieb eines Kraftfahrzeugs, das einen ersten Heiz-/Kühlkreislauf (1) mit einer darin angeordneten Wärmequelle/-senke (2) und einer ersten Pumpe (3) sowie einen zweiten Heiz-/Kühlkreislauf (4) mit einer darin angeordneten zu heizenden/kühlenden Batterie (5) und einer zweiten Pumpe (6) umfasst,
**dadurch gekennzeichnet,**
**dass** die beiden Heiz-/Kühlkreisläufe (1, 4) über wenigstens ein Ventil (7) verbunden werden, derart, dass beide Heiz-/Kühlkreisläufe (1, 4) vom selben flüssigen Wärmeträger durchströmt werden.

13. Verfahren nach Anspruch 12, **dadurch gekennzeichnet, dass** die beiden Heiz-/Kühlkreisläufe (1, 4) in einem ersten Betriebszustand über das wenigstens eine Ventil (7) verbunden werden, wobei ein im zweiten Heiz-/Kühlkreislauf (4) zusätzlich vorgesehener und mit einem dritten Kühl-/Heizkreislauf (13) verbundener Wärmetauscher (12) deaktiviert ist und dass die beiden Heiz-/Kühlkreisläufe (1, 4) in einem zweiten Betriebszustand über das wenigstens eine Ventil (7) voneinander getrennt werden, wobei der zusätzlich vorgesehene Wärmetauscher (12) aktiviert ist.
